# EUROPÄISCHE PATENTSCHRIFT

(11) **EP 0 789 184 B1**
(45) Veröffentlichungstag und Bekanntmachung des Hinweises auf die Patenterteilung: **17.07.2002**
(21) Anmeldenummer: 97101417.0
(22) Anmeldetag: 30.01.1997
(51) Int. Cl.: F21S 8/10, B60Q 1/26, B60Q 1/30

(54) **Langgestreckte Signalleuchte für Fahrzeuge**
Elongated signal light for vehicles
Feu de signalisation allongé pour véhicules

(30) Priorität: 08.02.1996 DE 19604487
(43) Veröffentlichungstag der Anmeldung: 13.08.1997
(73) Patentinhaber: Hella KG Hueck & Co., 59552 Lippstadt (DE)
(72) Erfinder: Hahn, Kurt, 59558 Lippstadt (DE); Schwarz, Axel, 59556 Lippstadt (DE)

(56) Entgegenhaltungen:
- EP-A- 0 596 782
- EP-A- 0 648 969
- DE-A- 4 003 569
- DE-C- 4 217 512

## Beschreibung

Die Erfindung betrifft eine langgestreckte Signalleuchte für Fahrzeuge mit einer Lichtleiste, bestehend aus einer lichtdurchlässigen Abschlußscheibe einer Trägerplatte für Lichtquellen und einer zwischen Trägerplatte und Abschlußscheibe angeordneten Optikscheibe.

Aus der DE 42 17 512 C1 ist eine solche Signalleuchte für Fahrzeuge bekanntgeworden. Die Signalleuchte ist eine langgestreckte Lichtleiste, welche eine lichtdurchlässige Abschlußscheibe, eine Trägerplatte für Lichtquellen und eine zwischen den Lichtquellen und Abschlußscheibe angeordnete Optikscheibe aufweist. Als Trägerplatte dient eine Leiterplatte, welche mit Leuchtdioden bestückt ist. An die schmalen Seitenflächen der Optikscheibe sind Verbindungselemente angeformt, zwischen welchen die Trägerplatte eingesetzt ist und mit welchen die Trägerplatte selbstrastend verbunden ist. Die selbstrastende Verbindung zwischen der Trägerplatte und den Verbindungselementen der Optikscheibe muß spielfrei sein, da die Optikscheibe die Trägerplatte mit ihren Lichtquellen klapperfrei halten muß und die Distanz zwischen den Lichtquellen der Optikscheibe sehr genau sein muß. Die Herstellung spielfreier Rastverbindungen ist wegen enger Toleranzen kostenintensiv und das Fügen der beiden Teile kann umständlich und zeitaufwendig sein. Diese aus Optikscheibe und Trägerplatte bestehende optische Einheit ist auf eine untere Seitenwand der Lichtleiste aufgelegt. Die untere Seitenwand ist einstückig mit der Abschlußscheibe ausgeführt, während die obere Seitenwand, welche die optische Einheit abdeckt, ein mit der Abschlußscheibe und unteren Seitenwand verschweißtes separates Teil ist. Die optische Einheit ist zwischen der unteren und oberen Seitenwand durch Haltenasen gehalten, welche an die langen schmalen Seitenflächen der Optikscheibe angeformt sind und spielfrei in Öffnungen der unteren und oberen langen Seitenwand eingreifen. Auch hierbei sind die Haltenasen und Halteöffnungen wegen ihrem spielfreien Ineinandergreifen kostenintensiv in der Herstellung und zeitaufwendig und umständlich zu montieren. Zudem ist die Lichtleiste nicht mehr demontierbar und die obere Seitenwand ist ein zusätzliches Teil, welches in einem gesonderten Arbeitsgang mit der Abschlußscheibe zu verbinden ist. Die Lichtleiste ist in eine langgestreckte Öffnung der Fahrzeugkarosserie eingesteckt und liegt mit einem nach außen abstehenden Randabschnitt der Abschlußscheibe an dem äußeren Randbereich der langgestreckten Öffnung an. An der Fahrzeugkarosserie ist die Lichtleiste mit an ihrer Rückseite angebrachten Befestigungsschrauben festgesetzt.

Aus der DE 40 03 569 A1 ist eine Signalleuchte für Fahrzeuge bekanntgeworden, bei welcher eine Optikscheibe, welche zwischen den Lichtquellen einer Trägerplatte und seiner äußeren Abschlußscheibe angeordnet ist, mit der Abschlußscheibe verschweißt ist.

Aus der EP 0 596 782 A1 ist auch eine solche Signalleuchte für Fahrzeuge bekanntgeworden Aufgabe der Erfindung ist es, die im Oberbegriff des Anspruchs 1 beschriebene Signalleuchte derart zu gestalten, daß die Signalleuchte aus möglichst wenigen und einfach und schnell zu montierenden Teilen zusammensetzbar ist und trotzdem ein genauer Abstand zwischen der Optikscheibe und der Lichtquellen aufweisenden Trägerplatte gewährleistet ist. Diese Aufgabe wird nach der Erfindung dadurch gelöst, daß an lange Seitenränder der Abschlußscheibe mehrere Verbindungselemente angeformt sind, zwischen welchen die Optikscheibe und die Trägerplatte eingesetzt sind, wobei die Trägerplatte mit den Verbindungselementen der Abschlußscheibe verrastet ist und die Optikscheibe zusätzlich ein zwischen sich zugewandten Seiten von Abschlußscheibe und Trägerplatte sich erstreckendes Distanzstück ist. Die Lichtleiste besteht aus nur drei zusammengesetzten Teilen, nämlich der Abschlußscheibe, der Optikscheibe und der Trägerplatte der Lichtquellen. Die Optikscheibe ist zwischen die Verbindungselemente der Abschlußscheibe eingesetzt und nach dem Verrasten der Trägerplatte mit den Verbindungselementen zwischen Abschlußscheibe und Trägerplatte gehalten. Deshalb muß die Optikscheibe keine zusätzlichen Befestigungselemente zur Trägerplatte hin aufweisen. Trotzdem ist die Optikscheibe immer genau zu den Lichtquellen der Trägerplatte beabstandet, da die Optikscheibe an der der Abschlußscheibe zugewandten Seite der Trägerplatte anliegt. Die Optikscheibe trägt auch zur Versteifung der Lichtleiste bei, da sie ein zwischen Abschlußscheibe und Trägerplatte sich erstreckendes Distanzstück ist. Um eine klapperfreie Verbindung zwischen Optikscheibe, Trägerplatte und Abschlußscheibe zu erhalten, muß lediglich die Optikscheibe zwischen Abschlußscheibe und Trägerplatte eingespannt sein. Die Lichtleiste baut sehr flach, wenn die Optikscheibe zwischen Verbindungselementen der Abschlußscheibe an sich zugewandten Seitenrandabschnitten von Abschlußscheibe und Trägerplatte angrenzt. Hierbei ist es zweckmäßig, wenn die Optikscheibe mit an schmale Seitenflächen angeformten Distanzelementen an Seitenrandabschnitte von Abschlußscheibe und/oder Trägerplatte angrenzt. Bei einer solchen Anordnung liegen in Längsausdehnung der Lichtleiste gesehen an jeder Längsseite der Lichtleiste Verbindungselemente der Abschlußscheibe und Distanzelemente der Optikscheibe fluchtend hintereinander. Die Distanzelemente und die Verbindungselemente müssen somit nicht in die lichttechnisch wirksamen Bereiche von Abschlußscheibe und Optikscheibe hineinragen. Die flache Lichtleiste kann in sehr flache Heckspoiler integriert werden oder in flache Gehäuse, welche im Fahrzeuginneren hinter der Heckscheibe anbringbar sind.

Die selbstrastende Verbindung zwischen den Verbindungselementen der Abschlußscheibe und der Trägerplatte ist besonders einfach gestaltet, wenn die Verbindungselemente mit Rastöffnungen versehen sind, in welche an die langen Seitenränder der Trägerplatte angebrachte Rastnasen selbstrastend eingreifen. Die Rastnasen können mit Spiel in die Rastöffnungen eingreifen, wenn die Rastnasen durch die als Distanzstück dienende Optikscheibe gegen die zur Abschlußscheibe hin gerichtete Seite der Rastöffnungen gehalten sind. Dadurch ist ein schnelles Einrasten der Rastnasen in die Rastöffnungen sicher und die Rastnasen und die Rastöffnungen müssen nicht sehr eng toleriert werden.

Weiterhin ist es vorteilhaft, wenn die Rastnasen und die Verbindungselemente in Freimachungen der langen Seitenränder der Trägerplatte angeordnet sind und die Verbindungselemente zumindest auf einer Seite der Rastöffnungen mit einer Anschlagfläche an den zur Abschlußscheibe hin gerichteten langen Seitenrandabschnitt der Trägerplatte angrenzt. Dadurch kann die Trägerplatte so breit wie die Abschlußscheibe ausgeführt sein. Die Trägerplatte muß zwischen der Anschlagfläche und der Rastöffnung jedes Verbindungselementes nicht spielfrei gehalten sein, da die Optikscheibe ein Distanzstück für Abschlußscheibe und Trägerplatte ist. Die Optikscheibe ist in ihrer Längsausdehnung an der Trägerplatte fixiert, wenn sie mit einem Ansatz in eine mittig eines langen Seitenrandes der Trägerplatte eingebrachte Aussparung eingreift. Zudem addieren sich Toleranzabweichungen nicht über die gesamte Länge der Optikscheibe, sondern nur ausgehend von ihrer Mitte zu den beiden Seiten hin.

Bei einer besonders vorteilhaften Weiterbildung der Erfindung ist die Lichtleiste in eine langgestreckte Öffnung eines Gehäuses eingesetzt, welches eine obere und eine untere lange Seitenwand aufweist, deren Innenseiten in Einsetzrichtung der Lichtleiste verlaufen und von denen zumindest eine lange Seitenwand quer zur Einsetzrichtung und Längsausdehnung der Lichtleiste elastisch nachgiebig ausgeführt ist und die Lichtleiste zwischen der oberen und unteren Seitenwand einspannt und hält. Dadurch baut nicht nur die Lichtleiste sehr flach, sondern auch das die Lichtleiste aufnehmende Gehäuse. Zudem ist die Lichtleiste nach ihrem Einsetzen selbsttätig zwischen den langen Seitenwänden gehalten und zur Herstellung des Gehäuses sind keine zusätzlich verstellbaren Werkzeuge notwendig. Darüber hinaus kann das Gehäuse an der Außenseite der oberen und unteren Seitenwand eine glatte Oberfläche aufweisen.

Die Lichtleiste ist sehr sicher in dem Gehäuse festgesetzt, wenn das Gehäuse zumindest an der Innenseite einer langen Seitenwand angeformte Rastnocken aufweist. Die Rastnocken sind besonders vorteilhaft gestaltet, wenn sie sich zu seinem freien Ende hin verjüngen und eine in und eine entgegen der Einsetzrichtung der Optikscheibe gerichtete Gleitfläche aufweisen. Durch die in Einsetzrichtung gerichtete Gleitfläche ist eine Zwangsentformung des Gehäuses möglich und die entgegen der Einsetzrichtung gerichtete Gleitfläche dient zum leichteren Eindrücken der Lichtleiste in das Gehäuse.

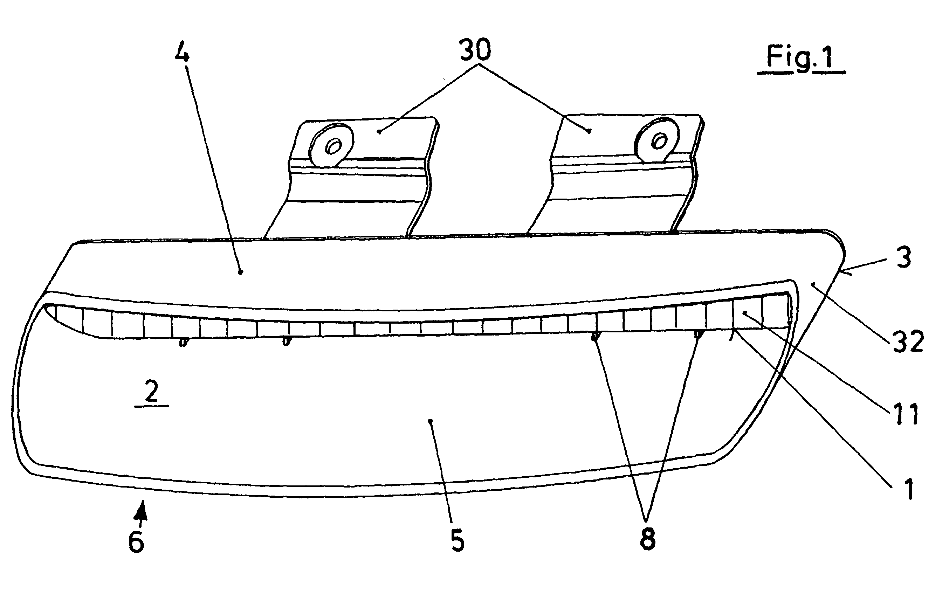

Ein Ausführungsbeispiel nach der Erfindung ist in den Zeichnungen dargestellt, und zwar zeigen
- Figur 1: in einer perspektivischen Ansicht eine langgestreckte Signalleuchte für Fahrzeuge, mit einer Lichtleiste, welche in ein Gehäuse eingesetzt ist;

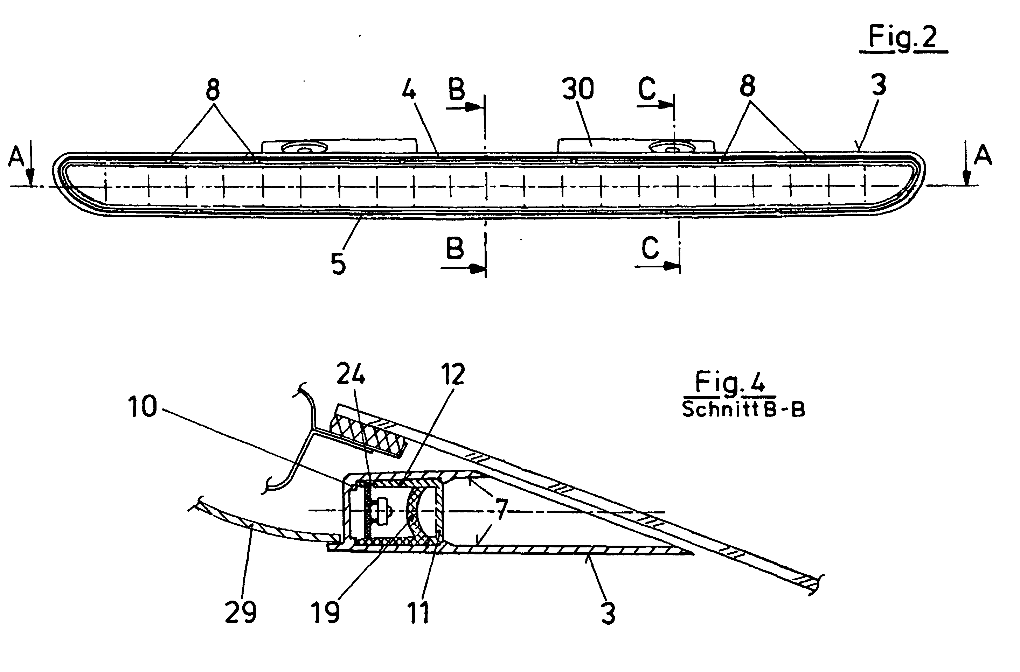

- Figur 2: eine Vorderansicht auf die Signalleuchte;

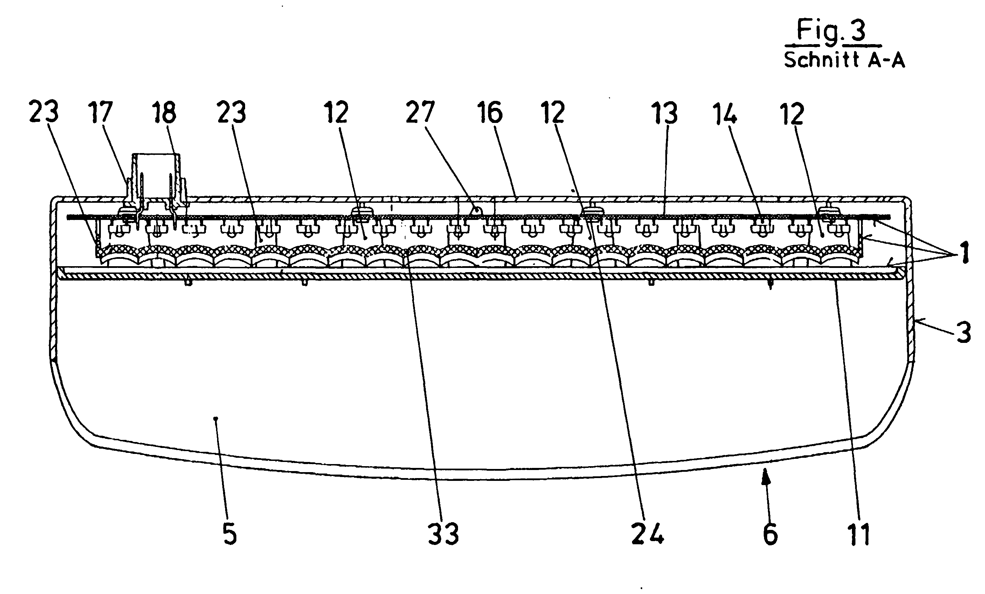

- Figur 3: einen Schnitt nach der Linie A-A in Figur 2 durch die Signalleuchte;

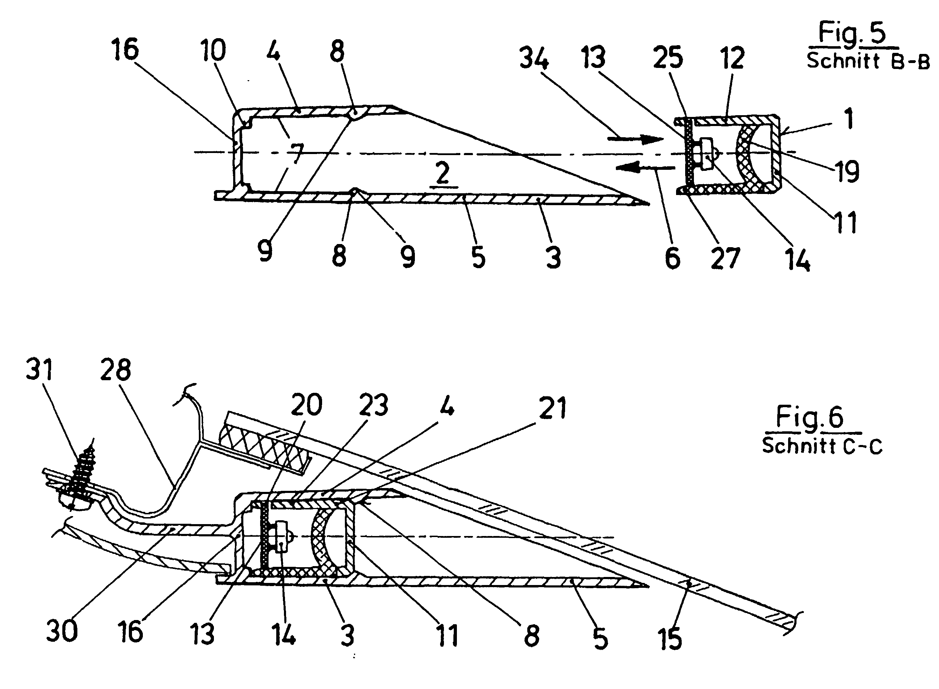

- Figur 4: einen Schnitt nach der Linie B-B in Figur 2;
- Figur 5: einen Schnitt nach der Linie B-B, mit dem Gehäuse und der Lichtleiste vor ihrem Zusammenfügen;
- Figur 6: einen Schnitt nach der Linie C-C in Figur 2;

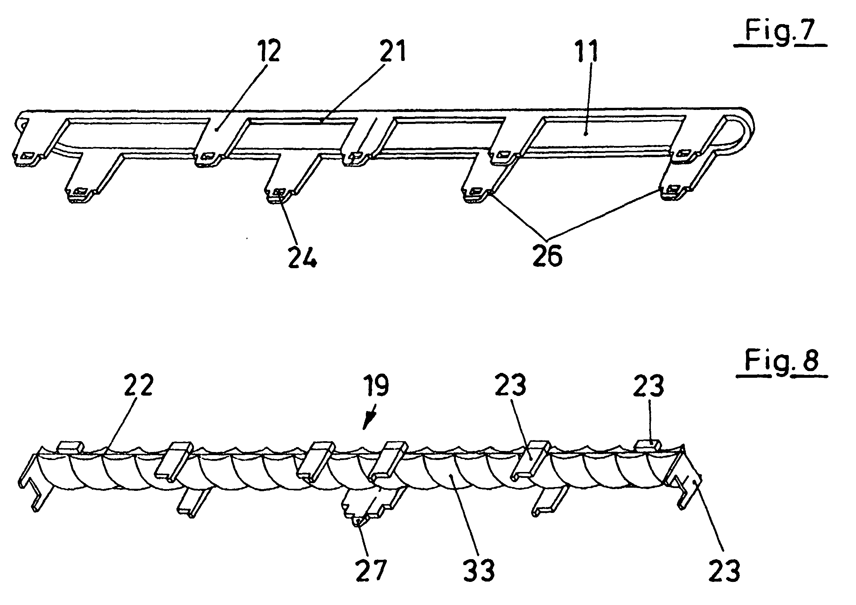

- Figur 7: eine perspektivische Darstellung einer äußeren Abschlußscheibe der Lichtleiste und
- Figur 8: in einer perspektivischen Darstellung eine Optikscheibe, welche im Inneren der Lichtleiste angeordnet ist.

Die Signalleuchte für Fahrzeuge ist im Fahrzeuginneren eines Fahrzeuges hinter dem oberen Randbereich einer Heckscheibe (15) angeordnet und ist an der an die Heckscheibe (15) angrenzenden Karosserie (28) befestigt. Von der Vorderseite der Signalleuchte her gesehen baut die Signalleuchte sehr flach und ist in der Horizontalen langgestreckt ausgeführt. Somit deckt die Signalleuchte vom Fahrzeuginneren her gesehen nur einen kleinen Bereich der Heckscheibe (15) ab und erscheint für den Fahrer beim Blick in den Rückspiegel nicht als ein störendes Teil. Der Dachhimmel (29) grenzt an den rückwärtigen Boden (16) der Signalleuchte an. Der Dachhimmel (29) kann auch die gesamte Signalleuchte abdecken und nahe der Heckscheibe (15) mit der Signalleuchte verbunden sein. Die Signalleuchte ist nahe einer Dichtung zwischen der Heckscheibe (15) und der Karosserie (28) angeordnet und ist an der Karosserie (28) mittels Befestigungslaschen (30) und Befestigungsschrauben (31) an der Karosserie befestigt. Die Befestigungsschrauben (31) sind mit ihrem Gewindeschaft durch eine Öffnung der Befestigungslaschen (30) hindurchgeführt und greifen in ein Gewinde der Karosserie (28) ein. Die Befestigungslaschen (30) sind an den Boden (16) eines Gehäuses (3) der Signalleuchte angeformt. Das Gehäuse (3) weist ausgehend vom Boden (16) eine lange obere und untere Seitenwand (4, 5) auf, welche mit sie verbindenden kurzen Seitenwänden (32) eine langgestreckte Öffnung (2) des Gehäuses (3) begrenzen.

Die Seitenwände (4, 5 und 32) erstrecken sich mit ihrem freien Rand bis nahe an die Heckscheibe (15) heran. Damit kein an der Heckscheibe reflektiertes Licht den Fahrzeuginnenraum störend erhellen kann. In die langgestreckte Öffnung (2) ist eine Lichtleiste (1) in Einsetzrichtung (6) eingeschoben. Die Seitenwände (4, 5 und 32) verlaufen, wie auch ihre Innenseiten (7) in Einsetzrichtung (6) der Lichtleiste (1).

Die Lichtleiste (1) ist aus einer Abschlußscheibe (11), einer Trägerplatte (13) für Lichtquellen (14) und einer zwischen den Lichtquellen (14) und der Abschlußscheibe (11) angeordneten Optikscheibe (19) zusammengesetzt. Als Trägerplatte (13) dient eine Leiterplatte und als Lichtquellen (14) mit der Leiterplatte verlötete Leuchtdioden. An die langen Seitenränder der Abschlußscheibe (11) sind laschenartige Verbindungselemente (12) angeformt, zwischen welchen die langgestreckte Optikscheibe (19) und die langgestreckte Trägerplatte (13) in Richtung (34) eingesetzt ist, wobei die Trägerplatte (13) mit Rastnasen (25) an ihren langen Seiten selbsttätig in jeweils eine Rastöffnung (24) der Verbindungselemente (12) mit großem Spiel eingreifen. An die schmalen Seitenflächen (22) der Optikscheibe (19), welche an den Innenseiten der Verbindungselemente (12) anliegt, sind zwischen Verbindungselementen (12) Distanzelemente (23) angeformt. Einige der Distanzelemente (23) erstrecken sich sowohl zu einem Seitenrandabschnitt (20) der Trägerplatte (13) als auch zu einem Seitenrandabschnitt (21) der Abschlußscheibe (11) hin, während andere Distanzelemente (23) sich ausschließlich zum Seitenrandabschnitt (21) der Abschlußscheibe (11) und/oder zur Trägerplatte (13) hin erstrecken. Die sich ausschließlich zur Trägerplatte (13) hin erstreckenden Distanzelemente (23) sind an die kurzen Seitenränder der Optikscheibe (19) angeformt. Die Optikscheibe (19) ist mit ihren Distanzelementen (23) zwischen der Trägerplatte (13) und der Abschlußscheibe (11) eingespannt und drückt somit die Rastnasen (25) der Trägerplatte (13) gegen die zur Abschlußscheibe (11) hin gerichtete Seite der Rastöffnungen (24) der Verbindungselemente (12). Die Rastnasen (25) der Trägerplatte (13) sind zusammen mit den Verbindungselementen (12) in einer nicht dargestellten Freimachung der langen Seitenränder der Trägerplatte (13) angeordnet. Die Verbindungselemente (12) weisen auf beiden Seiten ihrer Rastöffnung (24) eine Anschlagfläche (26) auf, welche an den Seitenrandabschnitt (20) der Trägerplatte (13) angrenzt. Die Optikscheibe (19) weist mittig einer Längsseite ein Distanzelement (23) mit einem Ansatz (27) auf, welcher in eine nicht dargestellte Aussparung am Seitenrand der Trägerplatte (13) eingreift.
Den in einer Reihe nebeneinander angeordneten Lichtquellen (14) ist jeweils ein das Licht bündelndes optisches Element (33) der Optikscheibe (19) zugeordnet. Während die Abschlußscheibe (11) mit das Licht streuenden optischen Elementen (nicht dargestellt) versehen ist. In Längsausdehnung der Lichtleiste (1) gesehen, liegen an beiden Längsseiten der Lichtleiste (1) Verbindungselemente (12) und Distanzelemente (23) fluchtend hintereinander. Dadurch ist es möglich, daß die Abschlußscheibe (11) mit der Außenseite ihrer langen Seitenränder und ihrer Verbindungselemente (12) zusammen mit der Außenseite der Distanzelemente (23) annähernd in einer in Einsetzrichtung (6) verlaufenden Fläche liegen.

Die obere und untere Seitenwand (4, 5) des Gehäuses (3) ist quer zur Einsetzrichtung (6) und Längsausdehnung der Lichtleiste (1) elastisch nachgiebig ausgeführt. An den Innenseiten (7) sind in einem Abstand zum Boden (16) Rastnocken (8) angeformt, welche eine in und eine entgegen der Einsetzrichtung (6) gerichtete Gleitfläche (9) aufweisen. Durch die Gleitflächen (9) verjüngen sich die Rastnocken (8) zu ihrem freien Ende hin. An die Innenseite des Bodens (16) des Gehäuses (3) sind von Ansätzen gebildete Anschläge (10) angeformt. Beim Einschieben der Lichtleiste (1) in das Gehäuse (3) gleiten die Verbindungselemente (12) mit ihren freien Enden an Gleitflächen (9) der Rastnocken (8) entlang und drücken dabei die federnden Seitenwände (4, 5) auseinander. Nach einem Anschlagen der freien Enden der Verbindungselemente (12) der Abschlußscheibe (11) an die Anschläge (10) federn die obere und untere Seitenwand (5) zusammen und liegen unter Vorspannung an den Außenseiten der Verbindungselemente (12) und den langen Seitenrändern von Abschlußscheibe (11) und Trägerplatte (13) an, während die Rastnocken (8) an die Vorderseite der Abschlußscheibe (11) angrenzen. Somit ist die Lichtleiste (1) in Einsetzrichtung (6) spielfrei zwischen den Anschlägen (10) und den Rastnocken (8) gehalten. An der Rückseite der Trägerplatte (13) ist ein Steckeranschluß (18) befestigt, welcher durch einen in dem Boden (16) des Gehäuses (3) eingebrachten Durchbruch (17) hindurchragt. Damit beim Aufstecken eines Steckers (nicht dargestellt) auf den Steckeranschluß (18) die Lichtleiste (1) nicht zur Heckscheibe (15) hingedrückt wird, ist der Steckeranschluß selbstrastend in dem Durchbruch (17) festgesetzt.

### Bezugszeichenliste

- 1: Lichtleiste
- 2: langgestreckte Öffnung
- 3: Gehäuse
- 4: obere Seitenwand
- 5: untere Seitenwand
- 6: Einsetzrichtung
- 7: Innenseiten
- 8: Rastnocken
- 9: Gleitfläche
- 10: Anschlag
- 11: Abschlußscheibe
- 12: Verbindungselemente
- 13: Trägerplatte
- 14: Lichtquellen
- 15: Heckscheibe
- 16: Boden
- 17: Durchbruch
- 18: Steckeranschluß
- 19: Optikscheibe
- 20: Seitenrandabschnitte der Trägerplatte
- 21: Seitenrandabschnitte der Abschlußscheibe
- 22: schmale Seitenflächen der Optikscheibe
- 23: Distanzelemente
- 24: Rastöffnungen
- 25: Rastnasen
- 26: Anschlagfläche
- 27: Ansatz
- 28: Karosserie
- 29: Dachhimmel
- 30: Befestigungslaschen
- 31: Befestigungsschrauben
- 32: kurze Seitenwände
- 33: optisches Element

## Patentansprüche

1. Langgestreckte Signalleuchte für Fahrzeuge, mit einer Lichtleiste (1), bestehend aus einer lichtdurchlässigen Abschlußscheibe (11), einer Trägerplatte (13) für Lichtquellen (14) und einer zwischen Trägerplatte (13) und Abschlußscheibe (11) angeordneten Optikscheibe (19), **dadurch gekennzeichnet, daß** an lange Seitenränder der Abschlußscheibe (11) mehrere Verbindungselemente (12) angeformt sind, zwischen welchen die Optikscheibe (19) und die Trägerplatte (13) eingesetzt sind, wobei die Trägerplatte (13) mit den Verbindungselementen (12) der Abschlußscheibe (11) verrastet ist und die Optikscheibe (19) zusätzlich ein zwischen sich zugewandten Seiten von Abschlußscheibe (11) und Trägerplatte (13) sich erstreckendes Distanzstück ist.

2. Signalleuchte nach Anspruch 1, **dadurch gekennzeichnet, daß** die Optikscheibe (19) zwischen Verbindungselementen (12) an sich zugewandten Seitenrandabschnitten (20, 21) von Abschlußscheibe (11) und Trägerplatte (13) angrenzt.

3. Signalleuchte nach Anspruch 1 oder 2, **dadurch gekennzeichnet, daß** die Optikscheibe (19) mit an schmale Seitenflächen (22) angeformten Distanzelementen (23) an Seitenrandabschnitte (20, 21) von Abschlußscheibe (12) und/oder Trägerplatte (13) angrenzt.

4. Signalleuchte nach einem der Ansprüche 1 bis 3, **dadurch gekennzeichnet, daß** die Verbindungselemente (12) der Abschlußscheibe (11) mit Rastöffnungen (24) versehen sind, in welche an die langen Seitenränder der Trägerplatte (13) angebrachte Rastnasen (25) selbstrastend eingreifen.

5. Signalleuchte nach Anspruch 4, **dadurch gekennzeichnet, daß** die Rastnasen (25) mit Spiel in die Rastöffnungen (24) eingreifen und durch die als Distanzstück dienende Optikscheibe (19) gegen die zur Abschlußscheibe (11) hin gerichtete Seite der Rastöffnungen (24) gehalten sind.

6. Signalleuchte nach Anspruch 4 oder 5, **dadurch gekennzeichnet, daß** die Rastnasen (25) und die Verbindungselemente (12) in Freimachungen der langen Seitenränder der Trägerplatte (13) angeordnet sind und die Verbindungselemente (12) zumindest auf einer Seite der Rastöffnungen (24) mit einer Anschlagfläche (26) an den zur Abschlußscheibe (11) hin gerichteten langen Seitenrandabschnitt (20) der Trägerplatte (13) angrenzt.

7. Signalleuchte nach Anspruch 3, **dadurch gekennzeichnet, daß** die Optikscheibe (19) mit einem Ansatz (27) in eine mittig eines langen Seitenrandes der Trägerplatte (13) eingebrachte Aussparung eingreift und die Optikscheibe (19) in ihrer Längsausdehnung an der Trägerplatte (13) festsetzt.

8. Signalleuchte nach einem der Ansprüche 1 bis 7, **dadurch gekennzeichnet, daß** die Lichtleiste (1) in eine langgestreckte Öffnung (2) eines Gehäuses (3) eingesetzt ist, welches eine obere und untere lange Seitenwand (4, 5) aufweist, deren Innenseiten in Einsetzrichtung (6) der Lichtleiste (1) verlaufen und von denen zumindest eine lange Seitenwand (4, 5) quer zur Einsetzrichtung (6) und Längsausdehnung der Lichtleiste (1) elastisch nachgiebig ausgeführt ist und die Abschlußscheibe (11) zwischen der oberen und unteren Seitenwand (4, 5) einspannt und hält.

9. Signalleuchte nach Anspruch 8, **dadurch gekennzeichnet, daß** das Gehäuse (3) zumindest an der Innenseite einer langen Seitenwand angeformte Rastnocken (8) aufweist, welche die Lichtleiste (1) selbsttätig in dem Gehäuse (3) festsetzen.

10. Signalleuchte nach Anspruch 9, **dadurch gekennzeichnet, daß** die Rastnocken (8) sich zu ihrem freien Ende hin verjüngen und eine in und eine entgegen der Einsetzrichtung der Optikscheibe (19) gerichtete Gleitfläche (9) aufweisen.

## Claims

1. Elongate signalling lamp for vehicles, having a lighting strip (1), consisting of a light transmitting covering lens (11), a carrier plate (13) for light sources (14) and an optical lens (19) arranged between the carrier plate (13) and the covering lens (11), **characterised in that** with the long side edges of the covering lens (11) there are formed a plurality of connecting elements (12) between which the optical lens (19) and the carrier plate (13) are inserted, the carrier plate (13) latching with the connecting elements (12) of the covering lens (11) and additionally the optical lens (19) extending as a distance piece between facing sides of the covering lens (11) and carrier plate (13).

2. Signalling lamp according to claim 1, **characterised in that** the optical lens (19), between the connecting elements (12), adjoins facing side edge sections (20, 21) of the covering lens (11) and carrier plate (13).

3. Signalling lamp according to claim 1 or 2, **characterised in that** the optical lens (19), by way of distance elements (23) formed on narrow side surfaces (22), adjoins side edge sections (20, 21) of the covering lens (12) and/or carrier plate (13).

4. Signalling lamp according to one of claims 1 to 3, **characterised in that** the connecting elements (12) of the covering lens (11) are provided with latch openings (24) into which latching lugs (25) provided on the long side edges of the carrier plate (13) engage by self latching.

5. Signalling lamp according to claim 4, **characterised in that** the latching lugs (25) engage in the latch openings (24) with play and are held against the side of the latch openings (24) that is directed towards the covering lens (11) by the optical lens (19) acting as distance piece.

6. Signalling lamp according to claim 4 or 5, **characterised in that** the latching lugs (25) and the connecting elements (12) are arranged in clearances of the long side edges of the carrier plate (13), and the connecting elements (12), at least at one side of the latch openings (24), by way of an abutment surface (26), adjoins the long side edge section (20) of the carrier plate (13) that is directed towards the covering lens (11).

7. Signalling lamp according to claim 3, **characterised in that** the optical lens (19), by way of an extension (27), engages in a recess made centrally in a long side edge of the carrier plate (13) and fixes the optical lens (19) in its lengthwise extent with respect to the carrier plate (13).

8. Signalling lamp according to one of claims 1 to 7, **characterised in that** the lighting strip (1) is inserted in an elongate opening (2) of a housing (3) which has a long upper and lower side wall (4, 5) whose inner surfaces extend in the insertion direction (6) of the lighting strip (1) and of which at least one long side wall (4, 5) is made resiliently yieldable transversely with respect to the insertion direction (6) and the lengthwise extent of the covering lens (11), and clamps and holds the covering lens (11) between the upper and lower side wall (4, 5).

9. Signalling lamp according to claim 8, **characterised in that** the housing (3), at least at the inner surface of a long side wall, has latching cams (8) formed on it which fix the lighting strip (1) automatically in the housing (3).

10. Signalling lamp according to claim 9, **characterised in that** the latching cams (8) taper towards their free end and have a slide surface (9) directed in, and opposite to, the insertion direction of the optical lens (19).

## Revendications

1. Feu de signalisation allongé pour véhicules, comportant une barre d'éclairage (1) constituée par une plaque de fermeture (11) transparente, une plaque support (13) pour des sources lumineuses (14) et une plaque optique (19) agencée entre la plaque support (13) et la plaque de fermeture (11), **caractérisé en ce que** sur des bords latéraux longs de la plaque de fermeture (11) sont moulés plusieurs éléments de liaison (12) entre lesquels sont mises en place la plaque optique (19) et la plaque support (13), la plaque support (13) étant enclenchée avec les éléments de liaison (12) de la plaque de fermeture (11), et la plaque optique (19) étant additionnellement une pièce d'écartement s'étendant entre des faces orientées l'une vers l'autre de la plaque de fermeture (11) et de la plaque support (13).

2. Feu de signalisation selon la revendication 1, **caractérisé en ce que** la plaque optique (19) entre les éléments de liaison (12) est adjacente à des tronçons (20, 21) de bord latéral, orientés l'un vers l'autre, de la plaque de fermeture (11) et de la plaque support (13).

3. Feu de signalisation selon l'une ou l'autre des revendications 1 et 2, **caractérisé en ce que** la plaque optique (19) est adjacente à des éléments d'écartement (23), moulés sur des surfaces latérales étroites (22), sur des tronçons de bord latéral (20, 21) de la plaque de fermeture (11) et/ou de la plaque support (13).

4. Feu de signalisation selon l'une quelconque des revendications 1 à 3, **caractérisé en ce que** les éléments de liaison (12) de la plaque de fermeture (11) sont pourvus d'ouvertures d'enclenchement (24) dans lesquelles s'engagent par auto-enclenchement des ergots d'enclenchement (25) ménagés sur les bords latéraux longs de la plaque support (13).

5. Feu de signalisation selon la revendication 4, **caractérisé en ce que** les ergots d'enclenchement (25) s'engagent avec jeu dans les ouvertures d'enclenchement (24) et sont retenus par la plaque optique (19) servant de pièce d'écartement contre la face des ouvertures d'enclenchement (24) qui est orientée vers la plaque de fermeture (11).

6. Feu de signalisation selon l'une ou l'autre des revendications 4 et 5, **caractérisé en ce que** les ergots d'enclenchement (25) et les éléments de liaison (12) sont agencés dans des dégagements des bords latéraux longs de la plaque support (13), et **en ce qu'**au moins sur un côté des ouvertures d'enclenchement (24), les éléments de liaison (12) sont adjacents avec une surface de butée (26) au tronçon de bord latéral long (20) de la plaque support (13) qui est orienté vers la plaque de fermeture (11).

7. Feu de signalisation selon la revendication 3, **caractérisé en ce que** la plaque optique (19) s'engage avec un prolongement (27) dans un évidement ménagé au milieu d'un bord latéral long de la plaque support (13), et **en ce que** la plaque optique (19) est fixée dans son extension longitudinale sur la plaque support (13).

8. Feu de signalisation selon l'une quelconque des revendications 1 à 7, **caractérisé en ce que** la barre d'éclairage (1) est mise en place dans une ouverture (2) allongée d'un boîtier (3) qui présente une paroi latérale longue supérieure (4) et une paroi latérale longue inférieure (5), dont les faces intérieures s'étendent en direction de mise en place de la barre d'éclairage (1) et dont au moins une paroi latérale longue (4, 5) est réalisée élastiquement souple transversalement à la direction de mise en place (6) et à l'extension longitudinale de la barre d'éclairage (1), et **en ce que** la plaque de fermeture (11) est enserrée et retenue entre la paroi latérale supérieure (4) et la paroi latérale inférieure (5).

9. Feu de signalisation selon la revendication 8, **caractérisé en ce que** le boîtier (3) présente des cames d'enclenchement (8) moulées au moins sur la face intérieure d'une paroi latérale longue, lesquelles immobilisent automatiquement la barre d'éclairage (1) dans le boîtier (3).

10. Feu de signalisation selon la revendication 9, **caractérisé en ce que** les cames d'enclenchement (8) se rétrécissent vers leur extrémité libre et présentent une surface de glissement (9) orientée dans la direction de mise en place de la plaque optique (19) et une surface de glissement orientée dans la direction opposée.
